# EUROPÄISCHE PATENTSCHRIFT

(11) **EP 1 354 162 B1**
(45) Veröffentlichungstag und Bekanntmachung des Hinweises auf die Patenterteilung: **13.07.2005**
(21) Anmeldenummer: 02715463.2
(22) Anmeldetag: 23.01.2002
(51) Int. Cl.: F16L 31/00

(54) **KUPPLUNG, MIT EINEM GLEITRING, ZUR VERBINDUNG ZWEIER FEUERWEHRSCHLÄUCHE**
COUPLING WITH A SLIP-RING FOR CONNECTING TWO FIRE HOSES
RACCORD, EQUIPE D'UNE BAGUE DE GLISSEMENT, POUR LE RACCORDEMENT DE DEUX TUYAUX D'INCENDIE

(30) Priorität: 23.01.2001 DE 10102815
(43) Veröffentlichungstag der Anmeldung: 22.10.2003
(73) Patentinhaber: Fettweis, Herbert, 40489 Düsseldorf (DE)
(72) Erfinder: Fettweis, Herbert, 40489 Düsseldorf (DE)
(74) Vertreter: Christophersen, Ulrich Rudolf
(86) Internationale Anmeldenummer: PCT/EP2002/000607
(87) Internationale Veröffentlichungsnummer: WO 2002/059520

(56) Entgegenhaltungen:
- DK-U3- 9 600 363
- US-A- 1 860 038
- US-A- 4 139 224

## Beschreibung

Die Erfindung betrifft eine Kupplung zur Verbindung zweier Feuerwehrschläuche nach dem Oberbegriff des Anspruchs 1. Eine solche Kupplung ist aus US-A-4 139 224 bekannt und besteht aus
- einem Innenteil mit einem Flanschabschnitt und einem Hülsenabschnitt, wobei der Flanschabschnitt unter Zwischenlage mindestens einer Dichtung gegen den Flanschabschnitt einer weiteren, gleichartigen Kupplung abstützbar ist, und der Hülsenabschnitt in das Schlauchende des Feuerwehrschlauchs hineinragt,
- einem außen mit über den Umfang verteilten Greifvorsprüngen versehenen und auf dem Innenteil drehbaren Außenteil mit in das Außenteil der weiteren Kupplung in Eingriff bringbaren Kupplungsorganen,
- einem das Schlauchende umgebenden und dieses durch radial von außen ausgeübten Druck auf dem Hülsenabschnitt fixierenden Ring.

Bei der Verbindung von Feuerwehrschläuchen kommt es auf größtmögliche Schnelligkeit, verbunden mit einer entsprechend robusten Gestaltung der Kupplungselemente an. Hierzu ist jedes Kupplungselement zweiteilig gestaltet mit einem Innenteil und einem darauf drehbar gelagerten Außenteil, an dem die formschlüssig in das jeweils andere Kupplungselement eingreifenden, bajonettartigen Kupplungsorgane ausgebildet sind. Aus Gründen der Handhabung und insbesondere Griffigkeit ist der Außendurchmesser des Außenteils deutlich größer als das das Schlauchende aufnehmende Innenteil. Bei einem in der Bundesrepublik Deutschland von den Berufsfeuerwehren und freiwilligen Feuerwehren eingesetzten C-Schlauch von 15 m Länge besteht dieser Maßunterschied in den Durchmessern ca. 26 mm. In der Praxis des Brandeinsatzes führt dies häufig zu Schwierigkeiten, wenn die Kupplungselemente sich an Hindernissen wie z.B. Treppen, Stützen, Kanten, Türsperren usw. verhaken. Dies kann, etwa bei Einsätzen mit Atemschutzgerät in verrauchten Räumen zu schwierigen und für die beteiligten Feuerwehrleute lebensbedrohenden Situationen führen, wenn diese einen am Einsatzort bereits zurückgelegten Weg wieder zurückgehen müssen, um eine an einem Hindernis verklemmte Kupplung zu lösen und über das Hindernis zu bewegen.

Eine Kupplung zur Verbindung zweier Feuerwehrschläuche mit den eingangs genannten Merkmalen ist aus der DE 297 15 725 U1 bekannt. Zur Schonung des Feuerwehrschlauches, wenn dieser z. B. über den Boden gezogen wird, sowie ferner zum Zwecke der Verbindung des Feuerwehrschlauches mit der Kupplung ist bei dieser zum Stand der Technik gehörenden Konstruktion eine Überwurfmutter vorgesehen, welche mittels eines Gewindes auf das Innenteil der Kupplung aufschraubbar ist. Im Hinblick auf die genannte Funktion einer Fixierung des Schlauchendes an der Kupplung ist die Überwurfmutter Bestandteil einer zweiteiligen Spanneinrichtung, zu der außerdem eine innerhalb der Überwurfmutter angeordnete, flexible Klemmhülse gehört. Wird die Überwurfmutter mittels ihres Gewindes gegenüber dem Innenteil der Kupplung angezogen, so übt sie einen Druck auf schräg verlaufende Rampen der Klemmhülse aus, wodurch eine Klemmkraft auf das Ende des Feuerwehrschlauchs erzeugt wird. Diese Klemmtechnik erfordert eine relativ aufwendige Montage und Demontage. Außerdem neigt das zum Anziehen der Überwurfmutter erforderliche Gewinde zur Verschmutzung, wodurch sich die Montage bzw. Demontage des Feuerwehrschlauches zusätzlich erschweren kann.

Nachteilig bei der Kupplung gemäß der DE 297 15 725 U1 ist ferner, daß diese bei Zugausübung auf den Feuerwehrschlauch an Hindernissen und insbesondere an Kanten hängenbleiben kann. Eine gewisse Abhilfe schafft hier zwar die einen größeren Durchmesser als der Schlauch aufweisende Überwurfmutter. Jedoch wird auch dadurch ein Verhaken an Hindernissen wie Kanten, Treppenabsätzen etc. nicht wirklich verhindert.

Der Erfindung liegt daher die **Aufgabe** zugrunde, eine Kupplung zur Verbindung zweier Feuerwehrschläuche zu schaffen, die sich bei Zugausübung auf den Feuerwehrschlauch nicht an Hindernissen wie z. B. Kanten, Treppenabsätzen etc. verhaken kann, und die ferner eine besonders einfache Befestigung des Schlauchendes an dem Innenteil der Kupplung ermöglicht.

Zur **Lösung** dieser Aufgabe wird eine Kupplung gemäß Anspruch 1 vorgeschlagen.

Infolge der erfindungsgemäßen Gestalt der äußeren Mantelfläche des Gleitrings kann dieser sich bei Zugebelastungen auf den Feuerwehrschlauch nicht an Hindernissen verhaken. Der Gleitring übt außerdem eine weitere Funktion aus, indem dieser zugleich als radial von außen auf das Schlauchende druckausübendes Klemmelement dient. Hierbei übernimmt der Gleitring die Befestigung des Schlauchendes des Feuerwehrschlauchs auf dem Innenteil der Kupplung, indem sich der Gleitring vorzugsweise aus zwei gegeneinander verspannbaren Halbschalen zusammensetzt, zwischen deren Innenseiten und der Außenseite des Hülsenabschnitts sich ein Ringspalt befindet, welcher das Schlauchende aufnimmt. Die in der Praxis übliche Befestigung des Schlauches durch einen mehrfach um das Schlauchende gewickelten Draht kann auf diese Weise entfallen.

Gemäß einer Ausgestaltung der Kupplung ist die äußere Mantelfläche des Gleitrings im wesentlichen konisch gestaltet.

Gemäß einer weiteren Ausgestaltung der Erfindung ist der Gleitring an seiner Innenseite mit mindestens einer Eindrehung versehen, in die sich ein Axialabschnitt des Schlauchendes unter Klemmwirkung hineinlegt. Auf diese Weise wird eine sehr gute, teils reib- und teils formschlüssige Verbindung zwischen dem Innenteil und dem Schlauchende erreicht, die auch hohen Zugbelastungen in dem Feuerwehrschlauch standhalten kann.

Vorzugsweise sind die beiden Halbschalen, aus denen sich der Gleitring vorzugsweise zusammensetzt, durch eine Tangentialverschraubung gegeneinander verspannbar. Dies ermöglicht eine besonders einfache und schnelle reibschlüssige Befestigung des Schlauchendes auf dem Hülsenabschnitt des Innenteils.

Ferner ist der Gleitring mit einem in das Außenteil hineinragenden zylindrischen Bund versehen, dessen Durchmesser geringer ist, als der größte Durchmesser der äußeren Mantelfläche des Gleitrings. Durch einen solchen am Gleitring angeformten Bund läßt sich die Preßfläche zwischen dem Hülsenabschnitt des Innenteils und dem Gleitring verlängern, wodurch ein langerer Schlauchabschnitt klemmbar ist, was wiederum die Eigenschaften der Verbindung verbessert, auch hohen Zugbelastungen in dem Feuerwehrschlauch standzuhalten.

Von Vorteil ist es schließlich, wenn der größte Durchmesser des Gleitrings größer ist, als der Basisdurchmesser der radial nach außen vorstehenden Greifvorsprünge, aber geringer als der Außendurchmesser dieser Greifvorsprünge. Auf diese Weise bleibt die gute Greifbarkeit der Vorsprünge noch erhalten, so daß sich die Vorsprünge selbst mit Handschuhen gut ergreifen und zum Verriegeln der Kupplung drehen lassen.

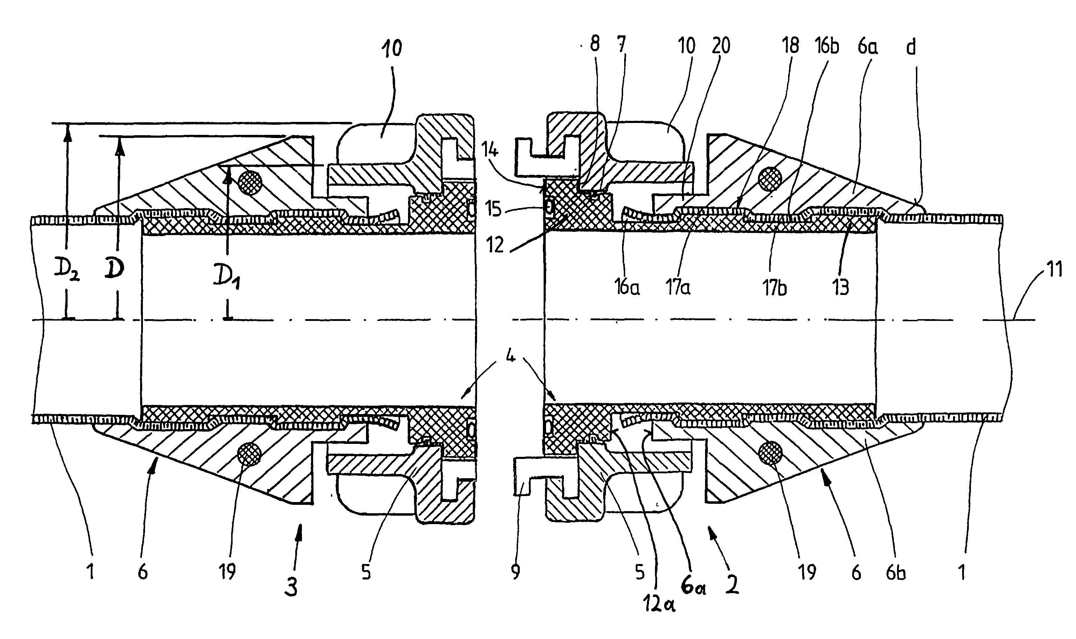

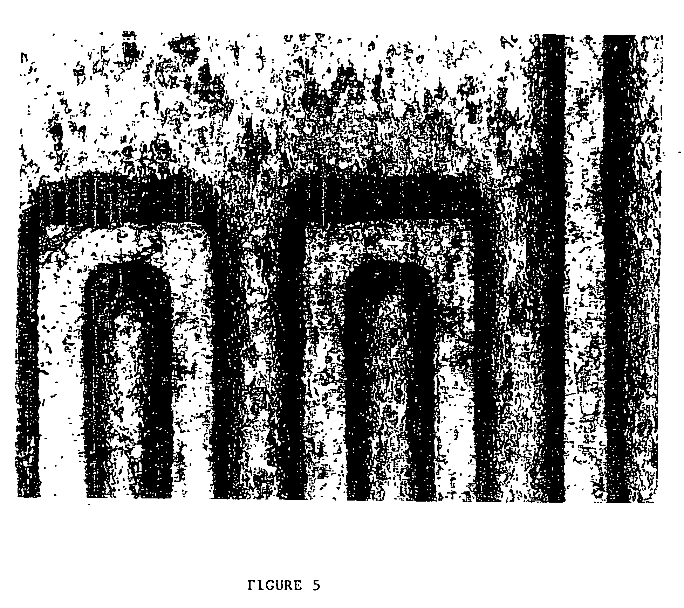

Weitere Einzelheiten werden nachfolgend anhand eines Ausführungsbeispieles unter Bezugnahme auf die Zeichnung erläutert. Auf der Zeichnung sind zwei miteinander zu verbindende Schlauchenden mit daran befestigten Kupplungen in einer Schnittdarstellung dargestellt.

Jeder der beiden zu verbindenden Feuerwehrschläuche 1 ist an seinem Ende mit einer Kupplung 2 bzw. 3 versehen. Die Verbindung der beiden Kupplungen 2, 3 erfolgt über eine daran ausgebildete Bajonett-Verriegelung. Der Feuerwehrschlauch 1 ist ein verstärkter, druckbelastbarer Gewebeschlauch.

Jede der beiden Kupplungen 2, 3 der Kupplungsverbindung setzt sich im wesentlichen aus drei Teilen zusammen, nämlich einem Innenteil 4 aus Gußmetall, einem Außenteil 5 ebenfalls aus Gußmetall und einem auf dem Innenteil 4 angeordneten Gleitring 6. Das Außenteil 5 ist ringförmig gestaltet und ist bei gelöster Kupplung frei drehbar auf einem zylindrischen Sitz 7 des Innenteils 4 gelagert. An den Sitz 7 schließt sich eine axial ausgerichtete Anschlagschulter 8 an, über die das Außenteil 5 den Verklammerungsdruck auf das Innenteil 4 weitergibt. Die eigentliche Verriegelung zwischen den korrespondierenden Außenteilen 5 erfolgt mittels einer Drehverriegelung nach Art eines Bajonetts, wozu auf der Zeichnung Haken 9 dargestellt sind, welche in eine entsprechende hinterschnittene Nut des jeweils anderen Außenteils eingreifen. Das Außenteil 5 ist ferner mit über seinen Umfang verteilten Greifvorsprüngen 10 in Gestalt von radialen Stegen versehen, an denen sich das Außenteil ergreifen und zwecks Herstellung der Kupplung verdrehen läßt. Die Vorsprünge 10 bestehen aus einzelnen vorspringenden Stegen, die sich im wesentlichen parallel zur Mittelachse 11 der Kupplung erstrecken.

Das vorzugsweise einstückige Innenteil 4 besteht aus einem Flanschabschnitt 12, an dem der Sitz 7 sowie die Anschlagschulter 8 für das Außenteil 5 angeformt sind, sowie einem Hülsenabschnitt 13. In die Stirnfläche 14 des Flanschabschnitts 12 ist eine Nut eingelassen, in der sich eine Dichtung 15 befindet. Diese Dichtung bewirkt, gegebenenfalls zusammen mit einer entsprechenden Dichtung in dem anderen Kupplungselement 3, die Flüssigkeitsdichtheit der Kupplung.

Der Hülsenabschnitt 13 weist einen geringeren Durchmesser als der Flanschabschnitt 12 auf, und ist wesentlich länger als dieser. Der Hülsenabschnitt 13 ist auf seinem Umfang mit mehreren Nuten versehen. Beim dargestellten Ausführungsbeispiel sind insgesamt zwei flache Nuten 16a, 16b vorgesehen. Auf derselben axialen Länge wie die Nuten 16a, 16b des Innenteils 4 ist der Gleitring mit flach vorspringenden Bünden 17a, 17b versehen. Die so strukturierte Innenseite des Gleitrings 6 hat einen geringfügig größeren Umfang als die korrespondierend strukturierte Außenseite des Hülsenabschnittes 13, wodurch sich ein Ringspalt ergibt, welcher das Schlauchende 18 des Feuerwehrschlauchs 1 aufnimmt. In dieser Position wird das Schlauchende 18 dadurch fixiert, daß der als Klemmelement dienende Gleitring 6 über die gesamte Länge seiner Innenseite eine radial von außen auf das Schlauchende 18 wirkende Druckkraft erzeugt. Hierzu ist der Gleitring 6, was die Zeichnung nicht erkennen läßt, zweigeteilt mit zwei identischen Halbschalen 6a, 6b, die sich insgesamt zu einem Ring ergänzen. Mit Hilfe von Schrauben 19, welche beide Halbschalen 6a, 6b zugleich durchdringen, werden die Halbschalen 6a, 6b gegeneinander gepreßt, wodurch gleichzeitig das Schlauchende 18 in die Außenfläche des Hülsenabschnitts 13 eingepreßt wird. Das Schlauchende 18 wird auf diese Weise sowohl reib- wie auch formschlüssig an dem Hülsenabschnitt des Innenteils 4 fixiert. Mit seiner Stirnfläche 6a kann sich der Gleitring 6 auch an der Axialschulter 12a des Flanschabschnitts 12 abstützen.

Der Gleitring 6 ist konisch gestaltet mit einer äußeren Mantelfläche, welche sich von einem größten Durchmesser D nahe dem Außenteil 5 bis auf einen geringsten Durchmesser d verringert, der nur geringfügig größer ist als der Durchmesser des Feuerwehrschlauchs 1. Der Übergang von dem größten Durchmesser D auf den kleinsten Durchmesser d erfolgt kontinuierlich, d.h. ohne dazwischen angeordnete Stufen, Absätze etc.. Vorzugsweise ist der nahe des Außenteils 5 erreichte größte Durchmesser D des Gleitrings 6 größer als der Basisdurchmesser D₁, jedoch kleiner als der Außendurchmesser D₂ der Greifvorsprünge 10. Auf diese Weise beeinträchtigt der große Durchmesser des Gleitrings 6 nicht die gute Ergreifbarkeit der zu ihrem Ende hin abgerundeten Greifvorsprünge 10 des Außenteils 5. Die äußere Mantelfläche des Gleitrings 6 ist vorzugsweise eine glatte, konische Fläche. Jedoch ist es auch möglich, die Mantelfläche des Gleitrings 6 aus einzelnen, sich radial erstreckenden Stegen zusammenzusetzen, die gemeinsam die Umfangskontur des Konus bilden. Solche Stege lassen sich in Aluminium oder Kunststoff spritztechnisch einfacher herstellen, als ein massiver, gedrehter Konus.

Die Schrauben 19 sind mit ihren Köpfen versenkt, ragen also nicht über die Konuskontur des Gleitrings hinaus. Die Schrauben 19 erstrecken sich dabei tangential zur Mittelachse 11 der beschriebenen Kupplungsverbindung.

### Bezugszeichenliste

- 1: Feuerwehrschlauch
- 2: Kupplung
- 3: Kupplung
- 4: Innenteil
- 5: Außenteil
- 6: Gleitring
- 6a: Stirnfläche
- 6a: Halbschale
- 6b: Halbschale
- 7: Sitz
- 8: Anschlagschulter
- 9: Haken
- 10: Greifvorsprung
- 11: Mittelachse
- 12: Flanschabschnitt
- 12a: Axialschulter
- 13: Hülsenabschnitt
- 14: Stirnfläche
- 15: Dichtung
- 16a: Nut
- 16b: Nut
- 17a: Bund
- 17b: Bund
- 18: Schlauchende
- 19: Schraube
- 20: zylindrischer Bund des Gleitrings

- D: Durchmesser
- d: Durchmesser
- D₁: Basisdurchmesser
- D₂: Außendurchmesser

## Patentansprüche

1. Kupplung zur Verbindung zweier Feuerwehrschläuche (1), bestehend aus
- einem Innenteil (4) mit einem Flanschabschnitt (12) und einem Hülsenabschnitt (13), wobei der Flanschabschnitt (12) unter Zwischenlage mindestens einer Dichtung (15) gegen den Flanschabschnitt einer weiteren, gleichartigen Kupplung (3) abstützbar ist, und der Hülsenabschnitt (13) in das Schlauchende (18) des Feuerwehrschlauchs hineinragt.
- einem außen mit über den Umfang verteilten Greifvorsprüngen (10) versehenen und auf dem Innenteil (4) drehbaren Außenteil (5) mit in das Außenteil der weiteren Kupplung (3) in Eingriff bringbaren Kupplungsorganen (9),
- einem das Schlauchende (18) umgebenden, geteilten Ring (6), zwischen dessen Innenseite und der Außenseite des Hülsenabschnittes (13) sich ein Ringspalt zur Aufnahme des Schlauchendes (18) befindet, wobei der Ring (6) das Schlauchende (18) durch radial von außen ausgeübten Druck auf dem Hülsenabschnitt (13) festklemmt,
**dadurch gekennzeichnet,**
**dass** der Ring (6) als Gleitring ausgebildet ist, dessen äußere Mantelfläche sich von einem größten Durchmesser (D) nahe dem Außenteil (5) bis auf einen geringsten Durchmesser verringert, der nur geringfügig größer als der Schlauchdurchmesser ist, und dass an dem Gleitring (6) ein innenseitig mit einer Klemmfläche für das Schlauchende (18) versehener, zylindrischer Bund (20) angeformt ist, der in das Außenteil (5) hineinragt und dessen Durchmesser geringer als der größte Durchmesser (D) des Gleitrings (6) ist.

2. Kupplung nach Anspruch 1,
***dadurch gekennzeichnet, dass***
sich der Gleitring (6) aus zwei gegeneinander verspannbaren Halbschalen (6a, 6b) zusammensetzt.

3. Kupplung nach Anspruch 1 oder Anspruch 2,
***dadurch gekennzeichnet, dass***
die äußere Mantelfläche des Gleitrings (6) im Wesentlichen konisch gestaltet ist.

4. Kupplung nach einem der Ansprüche 1 bis 3,
***dadurch gekennzeichnet, dass***
der Gleitring (6) an seiner Innenseite mit mindestens einer Eindrehung versehen ist, in die sich ein Axialabschnitt des Schlauchendes (18) unter Klemmwirkung hineinlegt.

5. Kupplung nach einem der Ansprüche 2 bis 4,
***dadurch gekennzeichnet, dass***
die Halbschalen (6a, 6b) zueinander symmetrisch sind.

6. Kupplung nach einem der Ansprüche 2 bis 5,
***dadurch gekennzeichnet, dass***
die Halbschalen (6a, 6b) durch eine Tangentialverschraubung (19) gegeneinander verspannt sind.

7. Kupplung nach einem der Ansprüche 1 bis 6,
***dadurch gekennzeichnet, dass***
der größter Durchmesser (D) des Gleitrings (6) größer ist, als der Basisdurchmesser (D₁) der Greifvorsprünge (10).

8. Kupplung nach Anspruch 7,
***dadurch gekennzeichnet, dass***
der größte Durchmesser (D) des Gleitrings (6) geringer ist, als der Außendurchmesser (D₂) der Greifvorsprünge (10).

9. Kupplung nach einem der vorangehenden Ansprüche,
***dadurch gekennzeichnet, dass***
sich der Gleitring (6) mit einer Stirnfläche (6a) gegen den Flanschabschnitt (12) des Innenteils (4) abstützt.

## Claims

1. Coupling for connecting two fire hoses (1), consisting of
- an inner part (4) with a flange section (12) and a sleeve section (13), it being possible for the flange section (12), with at least one seal (15) in between, to be supported against the flange section of a further coupling (3) of the same kind, and the sleeve section (13) projecting into the hose end (18) of the fire hose,
- an outer part (5) which is provided on the outside with gripping projections (10) distributed over the circumference, is rotatable on the inner part (4) and has coupling members (9) which can be brought into engagement in the outer part of the further coupling (3),
- a split ring (6) which surrounds the hose end (18) and between whose inside and the outside of the sleeve section (13) an annular gap for accommodating the hose end (18) is located, the ring (6) clamping the hose end (18) in place on the sleeve section (13) by pressure exerted radially from the outside,
**characterized in that** the ring (6) is designed as a slip-ring (6), the outer lateral surface of which decreases from a largest diameter (D) close to the outer part (5) down to a smallest diameter which is only slightly larger than the hose diameter, and **in that** a cylindrical collar (20) provided on the inside with a clamping surface for the hose end (18) is integrally formed on the slip-ring (6), this cylindrical collar (20) projecting into the outer part (5), and the diameter of the cylindrical collar (20) being smaller than the largest diameter (D) of the slip-ring (6).

2. Coupling according to Claim 1, **characterized in that** the slip-ring (6) is composed of two half shells (6a, 6b) which can be restrained against one another.

3. Coupling according to Claim 1 or Claim 2, **characterized in that** the outer lateral surface of the slip-ring (6) is of essentially conical design.

4. Coupling according to one of Claims 1 to 3, **characterized in that** the slip-ring (6) is provided on its inside with at least one turned recess, an axial section of the hose end (18) being put into this turned recess under a clamping effect.

5. Coupling according to one of Claims 2 to 4, **characterized in that** the half shells (6a, 6b) are symmetrical to one another.

6. Coupling according to one of Claims 2 to 5, **characterized in that** the half shells (6a, 6b) are restrained against one another by a tangential screwed connection (19).

7. Coupling according to one of Claims 1 to 6, **characterized in that** the largest diameter (D) of the slip-ring (6) is larger than the base diameter (D₁) of the gripping projections (10).

8. Coupling according to Claim 7, **characterized in that** the largest diameter (D) of the slip-ring (6) is smaller than the outside diameter (D₂) of the gripping projections (10).

9. Coupling according to one of the preceding claims, **characterized in that** the slip-ring (6) is supported with an end face (6a) against the flange section (12) of the inner part (4).

## Revendications

1. Raccord destiné au raccordement de deux tuyaux d'incendie (1), constitué de
- une partie interne (4) présentant un tronçon formant bride (12) et un tronçon formant manchon (13), le tronçon formant bride (12), avec interposition d'au moins un joint (15), étant susceptible de s'appuyer sur le tronçon formant bride d'un autre raccord (3) du même type, et le tronçon formant manchon (13) pénétrant dans l'extrémité (18) du tuyau d'incendie,
- une partie externe (5) susceptible de pivoter sur la partie interne (4) et pourvue de saillies de préhension (10) réparties sur la circonférence et, ainsi que d'organes de raccordement (9) susceptibles de s'engager dans la partie externe de l'autre raccord (3),
- une bague (6) fendue entourant l'extrémité de tuyau (18), entre la face interne de laquelle et la face externe du tronçon formant manchon (13) se trouve un espace annulaire destiné à recevoir l'extrémité de tuyau (18), la bague (6), du fait de la pression qu'elle exerce radialement à partir de l'extérieur, fixant par serrage l'extrémité de tuyau (18) sur le tronçon formant manchon (13),
**caractérisé en ce que**
la bague (6) est conformée en bague de glissement, dont l'enveloppe externe diminue, d'un diamètre (D) le plus important près de la partie externe (5), jusqu'à un diamètre (d) le plus réduit, faiblement supérieur au diamètre du tuyau, et **en ce qu'**est formé, sur la bague de glissement (6), un épaulement (20) cylindrique pourvu, sur sa face intérieure, d'une surface de serrage destinée à l'extrémité de tuyau (18), épaulement qui pénètre dans la partie externe (5) et dont le diamètre est inférieur au plus important diamètre (D) de la bague de glissement (6).

2. Raccord selon la revendication 1,
***caractérisé en ce que***
la bague de glissement (6) est constituée de deux demi-coques (6a, 6b) susceptibles d'être serrées l'une contre l'autre.

3. Raccord selon la revendication 1 ou la revendication 2,
***caractérisé en ce que***
l'enveloppe externe de la bague de glissement (6) est sensiblement conique.

4. Raccord selon l'une des revendications 1 à 3,
***caractérisé en ce que***
la bague de glissement (6) est pourvue, sur sa face interne, d'au moins une gorge tournée dans la masse, dans laquelle pénètre, en y étant coincé, un tronçon axial de l'extrémité de tuyau (18).

5. Raccord selon l'une des revendications 2 à 4,
***caractérisé en ce que***
les demi-coques (6a, 6b) sont symétriques l'une par rapport à l'autre.

6. Raccord selon l'une des revendications 2 à 5,
***caractérisé en ce que***
les demi-coques (6a, 6b) sont serrées l'une contre l'autre par l'intermédiaire d'une fixation tangentielle par vis (19).

7. Raccord selon l'une des revendications 1 à 6,
***caractérisé en* ce *que***
le plus important diamètre (D) de la bague de glissement (6) est supérieur au diamètre de base (D₁) des saillies de préhension (10).

8. Raccord selon la revendication 7,
***caractérisé en ce que***
le plus important diamètre (D) de la bague de glissement (6) est inférieur au diamètre extérieur (D₂) des saillies de préhension (10).

9. Raccord selon l'une des revendications précédentes,
***caractérisé en ce que***
la bague de glissement (6), par sa face frontale (6a), s'appuie contre le tronçon formant bride (12) de la partie interne (4).
